# EUROPEAN PATENT APPLICATION

(11) **EP 4 779 966 A1**
(43) Date of publication of application: **22.07.2026**
(21) Application number: 26150039.1
(22) Date of filing: 02.01.2026
(51) Int. Cl.: H04N 7/18

(54) **METHODS AND SYSTEMS FOR SUMMARIZING EVENTS CAPTURED BY A VIDEO SURVEILLANCE SYSTEM AND PROVIDING CORRESPONDING ALERTS**

(30) Priority: 20.01.2025 US 202519032337
(71) Applicant: Honeywell International Inc., Charlotte, NC 28202 (US)
(72) Inventor: SIVASANTHANAM, D, Charlotte, 28202 (US); ARAVAPALLI, Venkateswararao, Charlotte, 28202 (US); KODURI, Nitya Purnima, Charlotte, 28202 (US); KANNAIYAN, Karthikeyan, Charlotte, 28202 (US)
(74) Representative: Haseltine Lake Kempner LLP

(57) **Abstract**

A video surveillance system and method that uses artificial intelligence to process video streams from multiple cameras. A Generative AI video-to-text model generates text summaries of events from each camera's video stream. A Large Language Model (LLM) processes these text summaries to create a cumulative summary of events. In some cases, the system can receive audio from microphones associated with cameras and convert it to text summaries using an audio-to-text model. The LLM can generate real-time text alerts with details from video and audio streams, which can be converted to event tailored audio alerts using text-to-speech technology. The system may provide operators with access to the text summaries and allows keyword searching of events with links to corresponding video and/or audio clips. The LLM can aggregate multiple related events into unified event entries with descriptive summaries.

## Description

### TECHNICAL FIELD

The present disclosure relates generally to video surveillance systems, and more particularly to automatically identifying events captured in video streams of a video surveillance system, automatically summarizing the identified events and automatically providing alerts where applicable.

### BACKGROUND

Video Surveillance is one of the primary security systems deployed in various establishments like airports, casinos, industries, offshore facilities, harbors, and cities. The number of CCTVs in commercial establishments like airports, casinos etc. range from few tens to hundreds and even thousands, which can result in each video system operator being responsible for monitoring a large number of video streams. As such, it can be difficult for each video system operator to identify and catalog each event of interest that occurs during the video system operator's shift. Passing this information on to a next shift of video system operators can be useful to, for example, provide a next shift of video system operators with better situational awareness of the current security context of the facility. What would be desirable are systems and methods for automatically generating a cumulative summary of events occurring in the video streams from a plurality of video cameras of a video surveillance system. What would be desirable are systems and methods for automatically providing event tailored audible alerts and warnings to regions of a facility when certain events are detected.

### SUMMARY

The present disclosure relates generally to video surveillance systems, and more particularly to automatically identifying events captured in video streams of a video surveillance system, automatically summarizing the identified events, and in some cases automatically providing event tailored alerts when certain events are detected. An example may be found in a method of operating a video surveillance system of a facility. The illustrative method includes receiving a video stream from each of a plurality of video cameras of the video surveillance system. A Generative Artificial Intelligence (Gen AI) video-to-text summarization model is applied to each of the video streams captured by the plurality of video cameras to generate a text summary of events for each of the video streams of each of the plurality of video cameras. A Large Language Model (LLM) is applied to the text summary of each of the video streams of the plurality of video cameras to generate a cumulative summary of events in the video streams of the plurality of video cameras occurring during a set period of time. An operator of the video surveillance system is provided access to the cumulative summary of events.

Another example may be found in a video surveillance system. The video surveillance system includes a plurality of video cameras each providing a respective video stream. The video surveillance system includes a Generative Artificial Intelligence (Gen AI) video-to-text summarization model that is configured to generate a text summary of events for each of the video streams of each of the plurality of video cameras. The video surveillance system includes a Large Language Model (LLM) is configured to generate a cumulative summary of events in the video streams of the plurality of video cameras occurring during a set period of time based at least in part on the text summary of each of the video streams of the plurality of video cameras. The video surveillance system includes a user interface for providing an operator of the video surveillance system with access to the cumulative summary of events.

Another example may be found in a non-transitory computer readable medium storing instructions. When the instructions are executed by one or more processors, the one or more processors are caused to receive a video stream from each of a plurality of video cameras of a video surveillance system. The one or more processors are caused to apply a Generative Artificial Intelligence (Gen AI) video-to-text summarization model to each of the video streams captured by the plurality of video cameras to generate a text summary of events for each of the video streams of each of the plurality of video cameras. The one or more processors are caused to apply a Large Language Model (LLM) to the text summary of each of the video streams of the plurality of video cameras to generate a cumulative summary of events in the video streams of the plurality of video cameras occurring during a set period of time. The one or more processors are caused to apply the Large Language Model (LLM) to generate a real or near-real time text alert for one or more of the events, wherein each text alert includes a text description with one or more details derived from the text summary of one or more of the video streams. The one or more processors are caused to apply a Text-To-Speech (TTS) model to the text alert to generate an alert audio stream and to play the event tailored alert audio stream by speaker.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### BRIEF DESCRIPTION OF THE FIGURES

The disclosure may be more completely understood in consideration of the following description of various examples in connection with the accompanying drawings, in which:
Figure 1 is a schematic block diagram showing an illustrative video surveillance system;
Figures 2A and 2B are flow diagrams that together show an illustrative method of operating a video surveillance system;
Figure 3 is a flow diagram showing an illustrative series of steps that may be carried out by one or more processors when the one or more processors execute instructions that are stored on a non-transient, computer-readable storage medium; and
Figure 4 is a schematic block diagram showing an illustrative video surveillance system.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

### DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

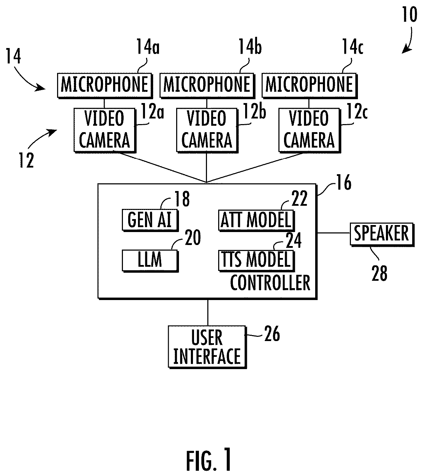

Figure 1 is a schematic block diagram showing an illustrative video surveillance system 10. The illustrative video surveillance system 10 includes a number of video cameras 12, individually labeled as 12a, 12b, and 12c. While three video cameras 12 are shown, in some cases the video surveillance system 10 may include any number of video cameras, and may include considerably more than three video cameras 12. The video surveillance system 10 includes a number of microphones 14, individually labeled as 14a, 14b, and 14c. In some cases, each of the microphones 14 may be associated with a particular one of the video cameras 12. Each of the video cameras 12 may be configured to provide a video stream to a controller 16. Each of the microphones 14 may be configured to provide an audio stream to the controller 16.

The controller 16 may be considered as including, or being operably coupled with, an LLM (Large Language Model) 18. The controller 16 may be considered as including, or being operably coupled with, a Gen AI (Generative Artificial Intelligence) video to text summarization model 18. The controller 16 may be considered as including, or being operably coupled with, an ATT (Audio-to-Text) model 22. The controller 16 may be considered as including, or being operably coupled with, a TTS (Text-To-Speech) model 24. In some cases, each of the Gen AI model 18, the LLM 20, the ATT model 22 and the TTS model 24 may be remotely located, and may be manifested on one or more cloud-based servers, for example. The illustrative video surveillance system 10 includes a user interface 26 that provides an operator access to the video surveillance system 10 and a speaker 28 that may be used to output alerts, for example.

In some cases, the Gen AI model 18 may be configured generate a text summary of events occurring in each of the video streams of each of the plurality of video cameras 12. A text summary may be generated for each of one or more video frames of a video stream. Example text based summarizations of three sequential frames N, N+1 and N+2 of an example video stream are shown below:

### Frame N

A middle-aged man, approximately 5'10" tall, is walking across the parking lot. He wears a red hat that casts a shadow across his forehead and part of his nose. His facial expression is neutral, with relaxed eyebrows and a slight squint in his eyes from the sunlight. His lips are pressed together gently, suggesting a calm, focused demeanor. He wears a blue jacket, unzipped to mid-chest, with slight creases around the elbows and shoulders as he swings his arms. His faded jeans show wrinkles near his knees, and he is wearing brown leather shoes. His right foot is firmly planted at (x: 230, y: 400), while his left foot is lifted in mid-stride at (x: 245, y: 380). The gray asphalt beneath him is rough and cracked, with small fractures running diagonally from (x: 100, y: 450) to (x: 600, y: 300). Yellow parking lines appear on either side, approximately 100 pixels apart, faintly worn from use. A red sedan is parked about 15 feet away, with its front bumper visible at (x: 500, y: 590) and its windshield reflecting the bright sunlight. The glare on the windshield forms a bright spot at (x: 510, y: 580), and the car's body has small specks of dust visible along the side. The shadow of the car stretches eastward about 120 pixels from (x: 480, y: 590) to (x: 360, y: 600). To the left of the scene, a row of bushes sways gently in the breeze, with green leaves casting intricate shadows on the ground from (x: 10, y: 20) to (x: 100, y: 100). In the distance, a concrete wall forms the boundary of the parking lot, running horizontally across the frame at the top.

### Frame N+1

The man continues his walk, now with his left foot lowered and planted on the ground at (x: 240, y: 385), while his right foot begins to lift off slightly at (x: 225, y: 395). His face shows a faint look of concentration, with his lips still closed but now slightly tighter as if in thought. His red hat sits squarely on his head, with a more pronounced shadow under its brim as the sun shifts. His blue jacket swings with his movement, with more defined wrinkles forming at the elbows. The jacket's material shimmers slightly in the sunlight, particularly around his left shoulder, where the light hits at an angle. The jeans show additional creases near the knees, and his brown shoes now scuff slightly against the asphalt. The ground beneath him is more visible, with the cracks in the asphalt appearing more prominent around (x: 110, y: 470). The yellow parking lines remain in place, though some faint tire tracks are now visible near his left foot, likely from a vehicle that passed recently. The red sedan remains parked, but the glare on the windshield has shifted slightly, now reflecting more sunlight at (x: 515, y: 585). A few dust particles are kicked up by the slight breeze and float near the rear of the car at (x: 510, y: 610). The car's shadow has shortened slightly to 115 pixels, from (x: 485, y: 595) to (x: 370, y: 600). The man's shadow, cast by the sun overhead, has also shortened slightly, now stretching 115 pixels from (x: 230, y: 400) to (x: 115, y: 460). The bushes to the left are swaying a bit more, their leaves reflecting sunlight and casting intricate shadows on the asphalt. The background concrete wall is now partially obscured by the movement of the leaves, with patches of sunlight shining through.

### Frame N+2

The man's expression has tightened slightly, with his eyebrows furrowing just a bit as if he's thinking hard about something. His left foot is now fully grounded at (x: 245, y: 390), while his right foot is mid-air at (x: 225, y: 400), suggesting he is walking with purpose. The red hat on his head tilts slightly to the right as he turns his head slightly, casting a longer shadow across the left side of his face. The blue jacket sways gently, though a new wrinkle has appeared on his back due to the motion. His right hand remains in his jacket pocket, causing the jacket to pull slightly at his waist. His jeans are more wrinkled at the knees, especially on his left leg, which is more extended as he walks. A small gust of wind kicks up some dust from the ground, visible at (x: 250, y: 415) near his left shoe. The red sedan remains parked, but the sunlight reflecting off its windshield has intensified, forming a larger glare at (x: 520, y: 590). The car's shadow continues to shift as the sun moves slightly, now only 110 pixels long from (x: 480, y: 595) to (x: 365, y: 600). The man's shadow has also changed slightly, now stretching from (x: 225, y: 400) to (x: 110, y: 460). The bushes sway more noticeably, and a few leaves detach, drifting across the parking lot, some landing at (x: 150, y: 600). The sunlight filtering through the bushes creates dappled shadows on the concrete wall behind them.

In some cases, the LLM 20 may be configured to generate a cumulative summary of certain events in the video streams of the plurality of video cameras. In some cases, the cumulative summary of events may be time stamped so that they can be selected or grouped according to a selected period of time. The selected period of time may correspond to a previous eight hour operator shift, for example. In some cases, the Gen AI model 18 and/or the LLM 20 may be trained to identify security significant events occurring in each of the video streams. In some cases, the ATT model 22 may be configured to receive an audio clip or audio stream, such as from one of the microphones 14, and output a summary such as a textual transcript of the audio clip or audio stream. In some cases, the TTS model 24 may be configured to convert text into speech.

In some cases, the LLM 20 may be configured to generate the cumulative summary of events in the video streams of the plurality of video cameras 12 occurring during a set period of time based at least in part on the text summary of each of the video streams of the plurality of video cameras 12 and the audio summary of each of the audio streams. In some cases, the LLM 20 may be configured to generate a real or near-real time text alert for one or more of the events, wherein each text alert includes a text description that includes one or more details derived from the text summary of one or more of the video streams and/or the audio summary of each of the audio streams. In some cases, the TTS model 24 may be configured to generate an alert audio stream based on the text alert and to play the event tailored alert audio stream on the speaker 28. The speaker 28 may be chosen from a plurality of speakers that is located in a region of the facility that is relevant or effected by the event tailored alert audio stream.

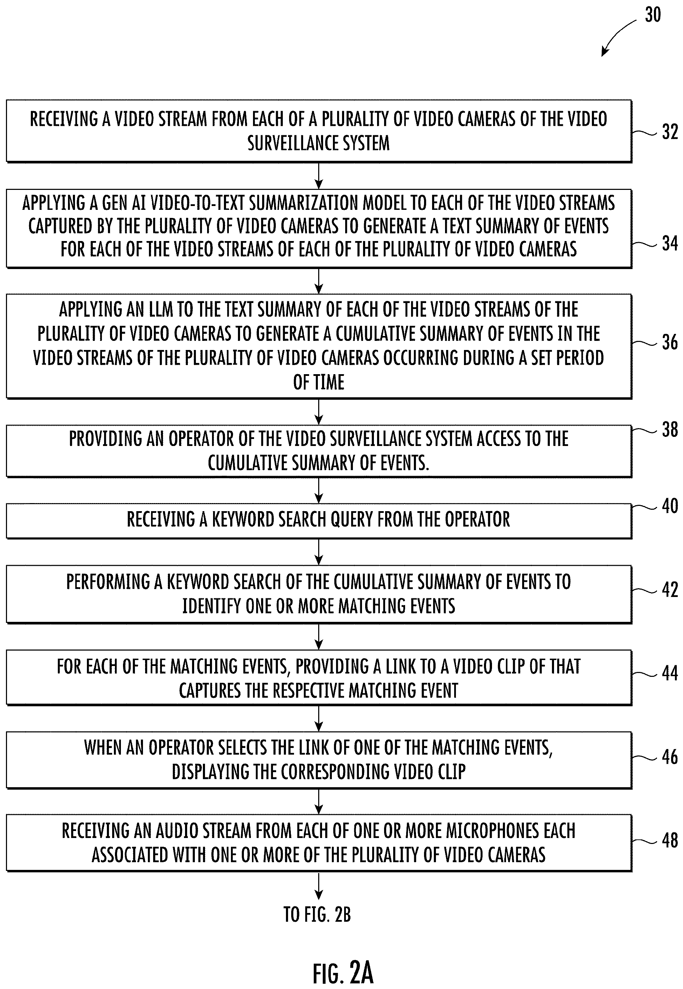

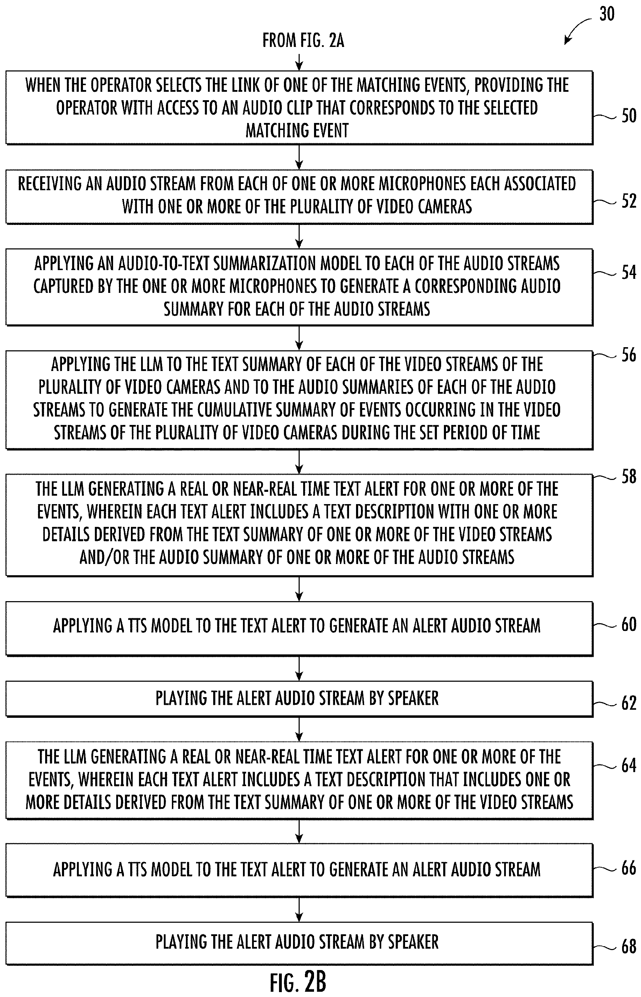

Figures 2A and 2B are flow diagrams that together show an illustrative method 30 of operating a video surveillance system (such as the video surveillance system 10). The illustrative method 30 includes receiving a video stream from each of a plurality of video cameras (such as the video cameras 12) of the video surveillance system, as indicated at block 32. A Generative Artificial Intelligence (Gen AI) video-to-text summarization model is applied to each of the video streams captured by the plurality of video cameras to generate a text summary of events for each of the video streams of each of the plurality of video cameras, as indicated at block 34. A Large Language Model (LLM) is applied to the text summary of each of the video streams of the plurality of video cameras to generate a cumulative summary of events in the video streams of the plurality of video cameras occurring during a set period of time, as indicated at block 36. The set period of time may be selected by the operator. As an example, the set period of time may correspond to at least a previous eight hour operator shift. An operator of the video surveillance system is provided with access to the cumulative summary of events, as indicated at block 38. This may enable the operator to quickly review and understand significant incidents that occurred during the previous shift.

The LLM may be trained to produce a cumulative summary of events that includes security significant events occurring in each of the video streams, and filters out mundane activities or events. The LLM may be trained to avoid redundant logging. For example, if a person is sitting and working for hours, the LLM may log this once and update only upon significant changes, such as the person standing up or leaving. The LLM may be trained to aggregate similar events into a single event entry, making the cumulative summary of events more concise and easier to review. For example, instead of multiple entries stating, "person is sitting and working," the LLM may log "person sat and worked from 9 AM to 5 PM."

In some cases, the Gen AI video-to-text summarization model and/or the LLM may be trained to identify security significant events occurring in each of the video streams, and filters out mundane activities or events. In some cases, the LLM may be configured to aggregate two or more events identified in the text summary associated with one of the plurality of video cameras into a single event entry in the cumulative summary of events. As an example, the single event entry in the cumulative summary of events may include a description that summarizes the aggregated two or more events. In some cases, the LLM may be trained to avoid redundant logging. For example, if a person is sitting and working for hours, the LLM may log this once and update only upon a significant change, such as the person standing up or leaving. In some cases, the LLM may be trained to aggregate similar events into a single event entry, making the cumulative summary of events more concise and easier to review. For example, instead of multiple entries stating, "person is sitting and working," the LLM may log "person sat and worked from 9 AM to 5 PM." In some cases, the events identified by the Generative Artificial Intelligence (Gen AI) video-to-text summarization model may include one or more of an object recognition event, a motion event, and a behavior event. Each of the text summaries may be generated in real or near-real time and may include a text summary of the video scene occurring in the corresponding video stream.

In some cases, the method 30 may include receiving a keyword search query from the operator, as indicated at block 40. A keyword search of the cumulative summary of events may be performed to identify one or more matching events, as indicated at block 42. For each of the matching events, a link may be provided to a video clip of that captures the respective matching event, as indicated at block 44. When an operator selects the link of one of the matching events, the corresponding video clip may be displayed, as indicated at block 46.

In some cases, the method 30 may include receiving an audio stream from each of one or more microphones (such as the microphones 14) each associated with one or more of the plurality of video cameras, as indicated at block 48. Continuing on Figure 2B, when the operator selects the link of one of the matching events, the operator is provided with access to an audio clip that corresponds to the selected matching event, as indicated at block 50.

In some cases, the method 30 may include receiving an audio stream from each of one or more microphones each associated with one or more of the plurality of video cameras, as indicated at block 52. An audio-to-text summarization model may be applied to each of the audio streams captured by the one or more microphones to generate a corresponding audio summary for each of the audio streams, as indicated at block 54. The LLM may be applied to the text summary of each of the video streams of the plurality of video cameras and to the audio summaries of each of the audio streams to generate the cumulative summary of events occurring in the video streams of the plurality of video cameras during the set period of time, as indicated at block 56.

In some cases, the method 30 may include the LLM generating a real or near-real time text alert for one or more of the events, wherein each text alert includes a text description with one or more details derived from the text summary of one or more of the video streams and/or the audio summary of one or more of the audio streams, as indicated at block 58. This may result in a real or near-real audio alert that is tailored to a particular event at hand. A Text-To-Speech (TTS) model may be applied to the event tailored text alert to generate an event tailored alert audio stream, as indicated at block 60. The event tailored alert audio stream may be played by speaker in real or near-real time, as indicated at block 62. In some cases, playing the event tailored alert audio stream may include broadcasting the alert audio stream in at least part of the facility to directly and quickly alert appropriate occupants of the facility.

In some cases, the method 30 may further include the LLM generating a real or near-real time text alert for one or more of the events, wherein each text alert includes a text description that includes one or more details derived from the text summary of one or more of the video streams, as indicated at block 64. A TTS model may be applied to the text alert to generate an alert audio stream, as indicated at block 66. The alert audio stream may be played by a speaker, as indicated at block 68.

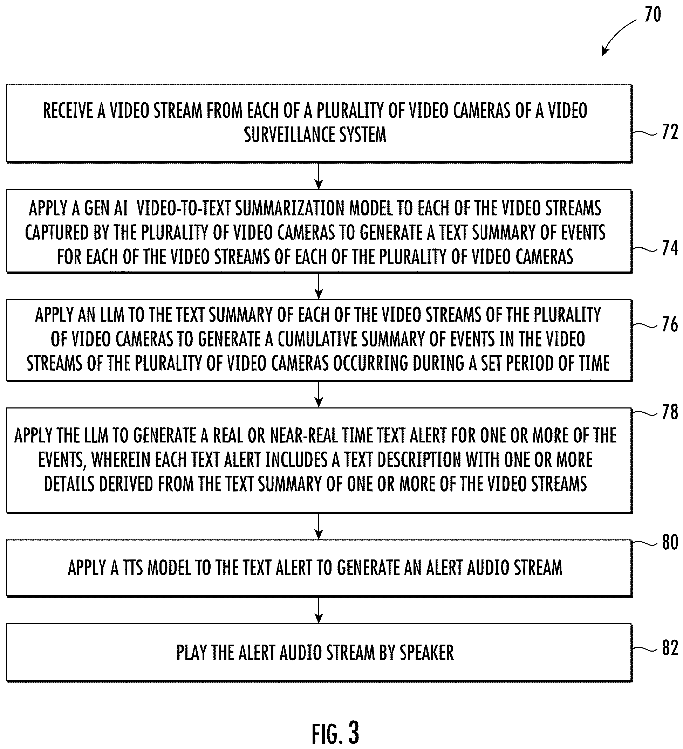

Figure 3 is a flow diagram showing an illustrative series of steps 70 that may be carried out by one or more processors when the one or more processors execute instructions that are stored on a non-transitory computer-readable storage medium. The one or more processors may be part of the controller 16, for example. In this example, the one or more processors are caused to receive a video stream from each of a plurality of video cameras of a video surveillance system, as indicated at block 72. The one or more processors are caused to apply a Gen AI video-to-text summarization model to each of the video streams captured by the plurality of video cameras to generate a text summary of events for each of the video streams of each of the plurality of video cameras, as indicated at block 74. The one or more processors are caused to apply a LLM to the text summary of each of the video streams of the plurality of video cameras to generate a cumulative summary of events in the video streams of the plurality of video cameras occurring during a set period of time, as indicated at block 76. The one or more processors are caused to apply the LLM to generate a real or near-real time text alert for one or more of the events, wherein each text alert includes a text description with one or more details derived from the text summary of one or more of the video streams, as indicated at block 78. The one or more processors are caused to apply a Text-To-Speech (TTS) model to the text alert to generate an alert audio stream, as indicated at block 80. The one or more processors are caused to play the alert audio stream by speaker, as indicated at block 82.

In some cases, an operator can give natural language commands like "summarize the events occurring at the front door in past 12 hours". This may be provided as text input, or may be provided by spoken word and translated into text by a Speech-To-Text (STT) model. In response, the LLM may provide a summary of the events occurring at the front door in the past 12 hours to the operator. In some cases, summary video clips and/or audio clips of the events may be displayed or made available for display to the operator. In some cases, example queries may be received from an operator. For example, an operator may query "Has any person come near the back door in the last day?" or "When did the red car parked in parking spot A4 leave?". In response, the LLM may assembly and display an answer to the query.

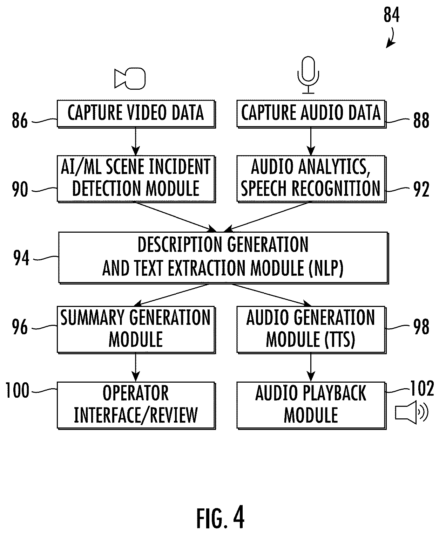

Figure 4 is a schematic block diagram showing an illustrative video surveillance system 84. Video data is captured, as indicated at block 86. Audio data is captured, as indicated at block 88. The video data is provided to an incident detection module 90. The audio data is provided to an analytics and speech recognition module 92. Resulting information is provided to a description generation and text extraction module 94. From there, information flows to a summary generation module 96 and an audio generation module 98. The summary generation module 96 outputs to an operator interface 100 and the audio generation module 98 outputs to an audio playback module 102.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A method of operating a video surveillance system of a facility, comprising:
receiving a video stream from each of a plurality of video cameras of the video surveillance system;
applying a Generative Artificial Intelligence (Gen AI) video-to-text summarization model to each of the video streams captured by the plurality of video cameras to generate a text summary of events for each of the video streams of each of the plurality of video cameras;
applying a Large Language Model (LLM) to the text summary of each of the video streams of the plurality of video cameras to generate a cumulative summary of events in the video streams of the plurality of video cameras occurring during a set period of time; and
providing an operator of the video surveillance system access to the cumulative summary of events.

2. The method of claim 1, wherein the Generative Artificial Intelligence (Gen AI) video-to-text summarization model and/or the Large Language Model (LLM) are trained to identify security significant events occurring in each of the video streams.

3. The method of either of claims 1 or 2, wherein the set period of time is selected by the operator,
optionally wherein the set period of time corresponds to at least a previous eight hour operator shift.

4. The method of any of claims 1-3, wherein the Large Language Model (LLM) is configured to aggregate two or more events identified in the text summary associated with one of the plurality of video cameras into a single event entry in the cumulative summary of events.

5. The method of claim 4, wherein the single event entry in the cumulative summary of events includes a description that summarizes the aggregated two or more events.

6. The method of any preceding claim, wherein the events identified by the Generative Artificial Intelligence (Gen AI) video-to-text summarization model include one or more of an object recognition event, a motion event, and a behavior event.

7. The method of any preceding claim, wherein each of the text summaries is generated in real or near-real time and include a text summary of the video scene occurring in the corresponding video stream.

8. The method of any preceding claim, further comprising:
receiving a keyword search query from the operator;
perform a keyword search of the cumulative summary of events to identify one or more matching events;
for each of the matching events, providing a link to a video clip of that captures the respective matching event; and
when an operator selects the link of one of the matching events, displaying the corresponding video clip.

9. The method of claim 8, comprising:
receiving an audio stream from each of one or more microphones each associated with one or more of the plurality of video cameras; and
when the operator selects the link of one of the matching events, providing the operator with access to an audio clip that corresponds to the selected matching event.

10. The method of any preceding claim, further comprising:
receiving an audio stream from each of one or more microphones each associated with one or more of the plurality of video cameras;
applying an audio-to-text summarization model to each of the audio streams captured by the one or more microphones to generate a corresponding audio summary for each of the audio streams; and
applying the Large Language Model (LLM) to the text summary of each of the video streams of the plurality of video cameras and to the audio summaries of each of the audio streams to generate the cumulative summary of events occurring in the video streams of the plurality of video cameras during the set period of time.

11. The method of claim 10, further comprising:
the Large Language Model (LLM) generating a real or near-real time text alert for one or more of the events, wherein each text alert includes a text description with one or more details derived from the text summary of one or more of the video streams and/or the audio summary of one or more of the audio streams;
applying a Text-To-Speech (TTS) model to the text alert to generate an alert audio stream; and
playing the alert audio stream by speaker.

12. The method of claim 11, wherein playing the alert audio stream includes broadcasting the alert audio stream in at least part of the facility to alert occupants of the facility.

13. The method of any preceding claim, further comprising:
the Large Language Model (LLM) generating a real or near-real time text alert for one or more of the events, wherein each text alert includes a text description that includes one or more details derived from the text summary of one or more of the video streams;
applying a Text-To-Speech (TTS) model to the text alert to generate an alert audio stream; and
playing the alert audio stream by speaker.

14. A video surveillance system comprising:
a plurality of video cameras each providing a respective video stream;
a Generative Artificial Intelligence (Gen AI) video-to-text summarization model configured to generate a text summary of events for each of the video streams of each of the plurality of video cameras;
a Large Language Model (LLM) configured to generate a cumulative summary of events in the video streams of the plurality of video cameras occurring during a set period of time based at least in part on the text summary of each of the video streams of the plurality of video cameras; and
a user interface for providing an operator of the video surveillance system with access to the cumulative summary of events.

15. A non-transitory computer readable medium storing instructions that when executed by one or more processors cause the one or more processors to:
receive a video stream from each of a plurality of video cameras of a video surveillance system;
apply a Generative Artificial Intelligence (Gen AI) video-to-text summarization model to each of the video streams captured by the plurality of video cameras to generate a text summary of events for each of the video streams of each of the plurality of video cameras;
apply a Large Language Model (LLM) to the text summary of each of the video streams of the plurality of video cameras to generate a cumulative summary of events in the video streams of the plurality of video cameras occurring during a set period of time;
apply the Large Language Model (LLM) to generate a real or near-real time text alert for one or more of the events, wherein each text alert includes a text description with one or more details derived from the text summary of one or more of the video streams;
apply a Text-To-Speech (TTS) model to the text alert to generate an alert audio stream; and
play the alert audio stream by speaker.
